# EUROPEAN PATENT APPLICATION

(11) **EP 2 301 360 A1**
(43) Date of publication of application: **30.03.2011**
(21) Application number: 10176915.6
(22) Date of filing: 15.09.2010
(51) Int. Cl.: A21C 11/10

(54) **Device for processing a strip of dough**

(30) Priority: 29.09.2009 IT VR20090151
(71) Applicant: RONDO SCHIO S.R.L., 36015 SCHIO (VI) (IT)
(72) Inventor: Stevan, Paolo, 36061, Bassano del Grappa (VI) (IT)
(74) Representative: Modiano, Micaela Nadia

(57) **Abstract**

A device (1) for processing a strip of dough, comprising a frame (2), which is associated with a line (3) for conveying at least one continuous strip of dough (100), the frame (2) supporting means for cutting the continuous strip of dough (100) into portions of dough (10), the processing device (1) comprising at least one supporting structure (4) for at least one processing element (5), which can be actuated on command so as to pass from a disengagement condition, in which the processing element (5) is spaced upward from the conveyance line (3), to an engagement condition, in which the processing element (5) engages at least one part of the strip of dough (100) or of the portion of dough (10); the frame (2) supports at least one containment receptacle (6) for at least one type of food, the containment receptacle (6) being arranged above the conveyance line (3), means being provided for the relative movement of the processing element (5) with respect to the containment receptacle (6) so as to move, on command, at least one part of the processing element (5) into contact with the food.

## Description

The present invention refers to a device for processing a strip of dough.

Nowadays, production lines for food products, such as for example bread, croissants, flatbreads and the like, are typically constituted by a device for producing a band of dough that is then fed to a conveyor belt.

Along the length of the conveyor belt there are various devices which perform different operations on the strip of dough such as, for example, cutting the strip into a plurality of bands of dough, cutting the strip or bands into shapes, moving or rotating the shapes, and/or the application, in determined areas of the strip or of the shapes, of particular ingredients (jam, fillers, fillings etc.).

With particular reference to the devices that perform the cutting of the strip of dough into shapes, it should be noted that in many cases cutting elements are provided which have, at the peripheral edge, blades arranged in a manner that corresponds to the shapes that one desires to make from the continuous strip or strips of dough.

In certain situations, and for example in the industrial production of loaves with wholemeal and/or rye flour, the strip of dough that travels on the conveyor belt is particularly sticky and, as a consequence of this, detaching the cutting elements (the blades of which are typically made of metal) from the upper surface of the strip, once the cut has been performed, is rather problematic.

To overcome this situation, production lines for food products have been provided in which tubs containing flour are positioned on the sides of the conveyor belt.

In this specific case, the cutting elements are supported by an arm that can rotate, on command, about a vertical axis and can be moved so as to be brought, alternately, into the tub containing the flour and onto the upper surface of the strip of dough so as to perform the cutting operations.

In practice, in this way, the flour is deposited on the outer surface of the cutting elements, thus reducing the friction when such elements engage the strip of dough to be cut.

Such lines, although quite widely used nowadays, are not free from drawbacks.

In the first place, positioning the tubs on the sides of the conveyor belt carrying the strip of dough leads to an obvious increase in the crosswise encumbrance of the line, with evident problems in managing it from the logistical point of view.

Also, the use of mechanical arms to move the cutting elements makes it impossible to reach a frequency of cutting manoeuvres that is compatible with the actual speed of the lines.

This is because the mechanical arms have to be able to rotate about an axis that is substantially vertical so as to bring, as noted, the cutting elements arranged at their ends, for each cutting operation, above the tub and above the belt while, at the same time, the cutting elements have to vary their height during the movement of the respective arm.

The aim of the present invention is to eliminate, or at least to drastically reduce, the above-mentioned drawbacks in known types of devices for processing a strip of dough.

Within this aim, an object of the present invention is to provide a device for processing a strip of dough that is very compact and productive.

Another object of the present invention is to enable, in a short time and with a limited number of operations, the correct functioning of the device upon variations in the type of treatment to be performed on the band of dough.

Another object of the present invention is to provide a device for processing a strip of dough that is reliable and very effective from the functional point of view.

Another object of the invention is to provide a device that can be made at low cost, so that its use is advantageous also from an economic viewpoint.

This aim, as well as these and other objects which will become better apparent hereinafter, are achieved by a device for processing a strip of dough, comprising a frame, which is associated with a line for conveying at least one continuous strip of dough, said frame supporting means for cutting the continuous strip of dough into portions of dough, said processing device comprising at least one supporting structure for at least one processing element, which can be actuated on command so as to pass from a disengagement condition, in which said processing element is spaced upward from said conveyance line, to an engagement condition, in which said processing element engages at least one part of said strip of dough or of said portion of dough, characterized in that said frame supports at least one containment receptacle for at least one type of food, said containment receptacle being arranged above said conveyance line, means being provided for the relative movement of said processing element with respect to said containment receptacle so as to move, on command, at least one part of said processing element into contact with said type of food.

Further characteristics and advantages of the invention will become better apparent from the following detailed description of some preferred, but not exclusive, embodiments of a treatment device according to the invention, illustrated by way of non-limiting example in the accompanying drawings, wherein:

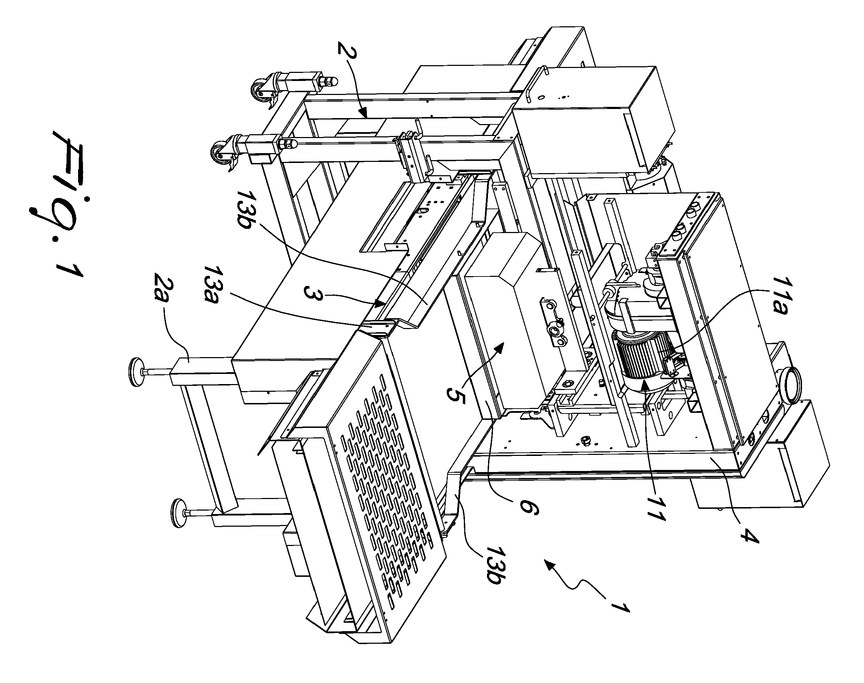

Figure 1 is a perspective view of a portion of a line for producing and processing food products in which, for the purposes of greater clarity, some covering components have been omitted;

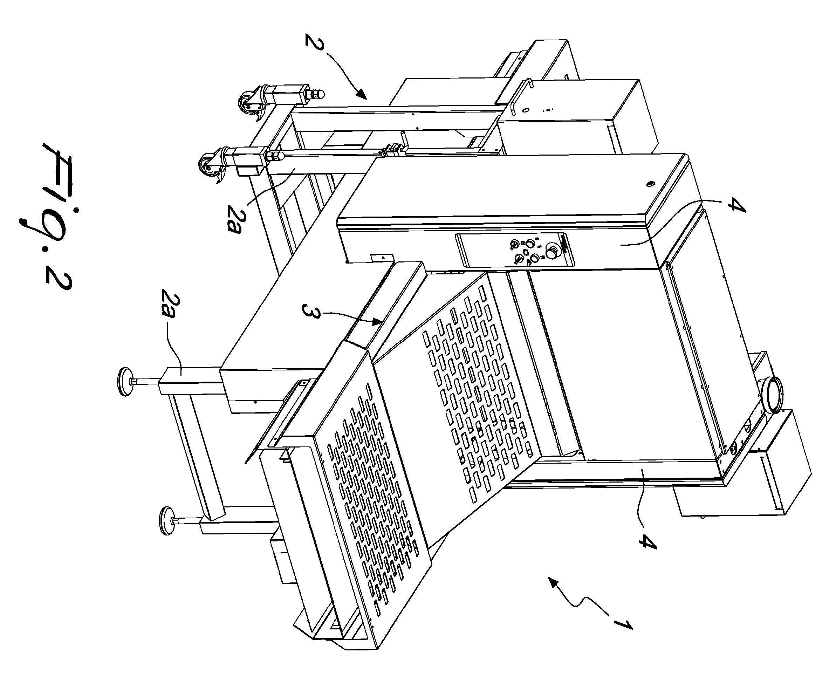

Figure 2 is a view similar to the previous one of the portion of the production and processing line;

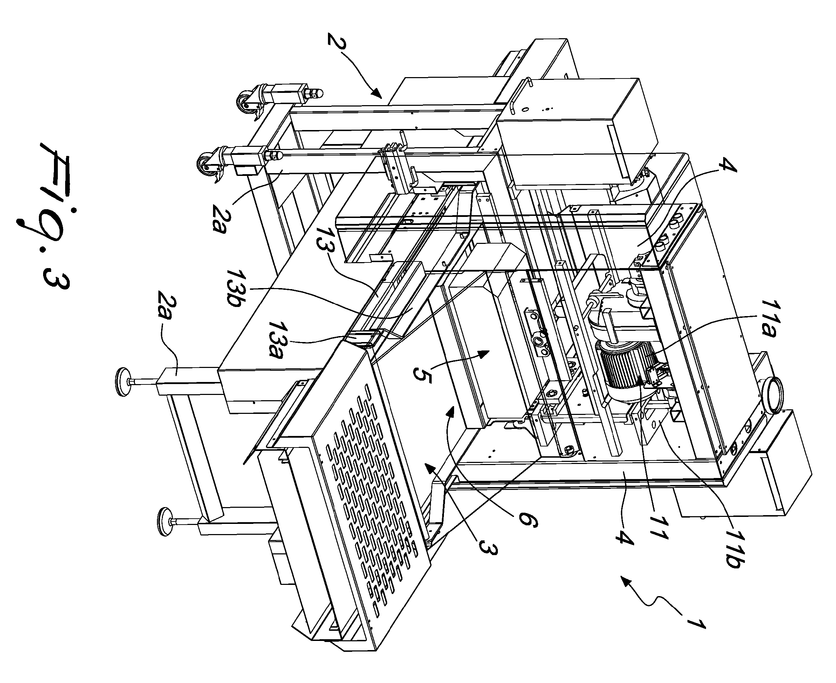

Figure 3 is a perspective view of the processing device according to the invention;
Figure 4 is a cross-section, taken along a longitudinal plane, of the production and processing line;

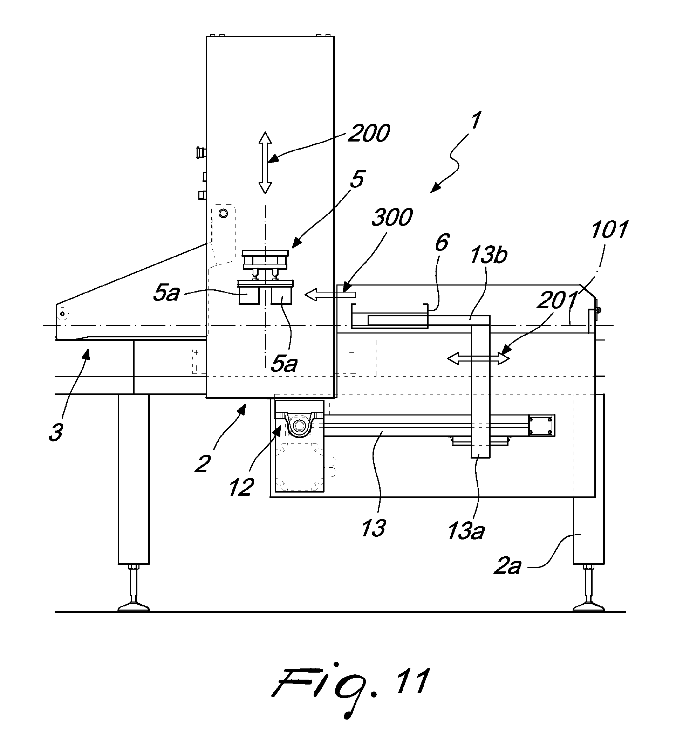

Figures 5 to 11 show, schematically, the different phases of functioning of the processing device according to the invention.

In the embodiments that follow, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures, the present invention refers to a device, indicated generally with the reference numeral 1 for processing, a strip of dough 100, typically a continuous strip of dough, which comprises a frame 2 that is associated with a line 3 for conveying the strip or strips of dough 100.

The frame 2 moreover supports, along the longitudinal extension 101 of the conveyance line 3, means of cutting the continuous strip of dough 100 into portions of dough 10.

The processing device 1 comprises, in particular, at least one supporting structure 4 for at least one processing element 5 which can be actuated on command so as to pass from a disengagement condition, in which the processing element 5 is spaced upward from the conveyance line 3 in such a way as not to be in contact with the strip of dough 100 or portions of dough 10, to an engagement condition, in which the processing element or elements 5 engage at least one part (typically an upper part) of the strip of dough 100 or portion of dough 10.

According to the present invention, the frame 2 supports at least one containment receptacle 6 for at least one type of food; the containment receptacle 6 is, in particular, arranged above the conveyance line 3.

The processing device 1 is also provided with means for the relative movement of the processing element or of each processing element 5 with respect to the containment receptacle 6 which are adapted to move, on command, at least one portion of the processing element 5 into contact with the food contained in the containment receptacle 6.

With particular reference to the embodiment shown in the figures, the movement means can be constituted by first means 11 for the actuation of the processing element 5 or of the processing elements 5 which are designed to move such processing element 5 along a direction 200 that is substantially perpendicular to the conveyance line 3 (and therefore substantially perpendicular to the plane of extension of the strip of dough 100 or the portions of dough 10).

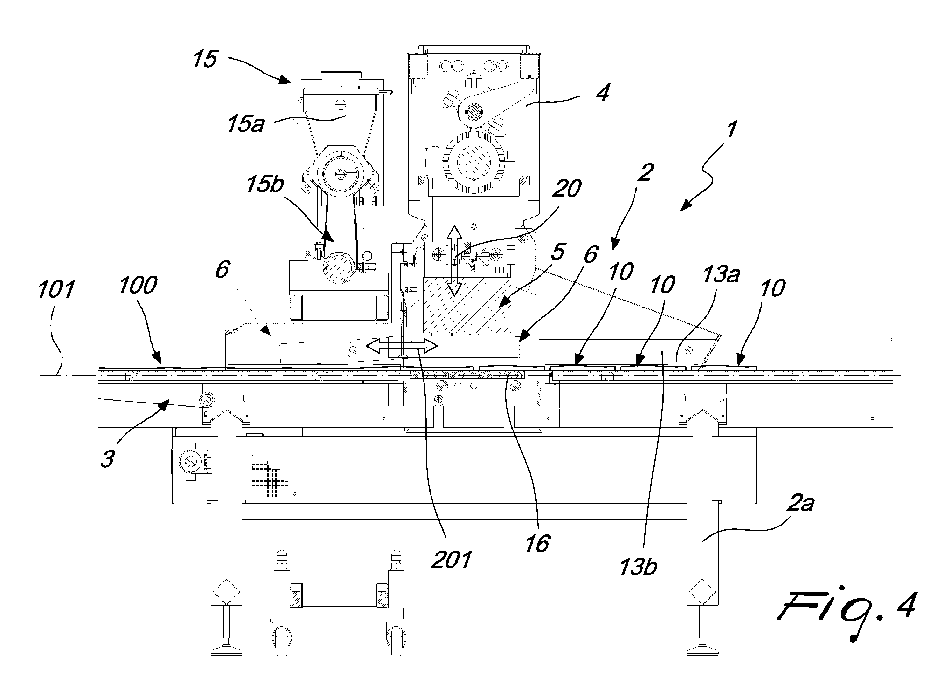

The movement means comprise, moreover, second actuation means 12, which are adapted to move the containment receptacle or each containment receptacle 6 between a first position (indicated in figure 4 by the unbroken line) which intercepts the direction of movement 200 of the processing element or elements 5, and a second position (indicated in figure 4 by the dotted line) in which the containment receptacle 6 is arranged above the conveyance line 3 in an area where such containment receptacle 6 does not interfere with the movement of the or of a respective processing element 5 between its disengagement condition and its engagement condition along the direction of movement 200.

Advantageously, the second actuation means 12 are adapted to move the containment receptacle 6 along a direction that is substantially parallel to the direction (shown by the arrow 201) of longitudinal extension of the conveyance line 3.

In this regard, the frame 2 can be provided with two lower sliding guides 13 which run along the direction 201 of the conveyance line 3 and from which respective lateral support members 13a rise up which are connected, substantially at their upper ends, to lateral bars 13b for supporting the containment receptacle 6.

Between the frame 2 and the containment receptacle 6 it is thus possible to ensure the operation of such second actuation means 12 and, practically speaking, such means can be constituted for example by one or more linear actuators.

The processing element or elements 5 are brought, cyclically, into contact with the food contained in the respective containment receptacle 6 before being brought to the condition of engagement with the strip of dough 100 or the portion of dough 10.

According to a preferred embodiment, it is possible to ensure that, while the processing element 5 is in the disengagement condition, the second actuation means 12 are commanded to move, along the direction 201 which is substantially parallel to the direction of longitudinal extension of the strip of dough 100, the containment receptacle 6 into the first position so as to locate it below the processing element 5.

At this point the first actuation means 11 operate on the processing element or elements 5, moving them along the direction of movement 200 (which is substantially perpendicular to the conveyance line 3) so as to bring them into contact with the food contained in the containment receptacle 6.

Subsequently, the first actuation means 11 operate on the processing elements 5 to lift them above the containment receptacle 6 so as to permit the containment receptacle 6 to be brought, by the action of the second actuation means 12, into the second position.

At this point, the first actuation means 11 operate again on the processing element or elements 5 to bring them into the condition of engagement with the strip of dough 100 or portions of dough 10.

Advantageously, the processing element or elements 5 comprise(s) an element 5a for cutting the continuous strip of dough 100 into the portions of dough 10.

In this specific case, it is advisable that the containment receptacle 6 be designed to contain a food that is adapted to reduce the detachment friction between the cutting element 5 and the strip of dough 100.

This food that is adapted to reduce the detachment friction is selected, advisably, from the group comprising flour, oil, water and the like.

Alternatively, the processing elements 5 can be constituted for example by a grip element; in this specific case the food contained in the containment receptacle is constituted by at least one food to be positioned in predefined areas of the strip of dough 100 or portions of dough such as, for example, jam, custard, chocolate and/or foods for filling in general.

Alternatively, the processing elements 5 can be constituted by grip apparatuses that are adapted to enable the removal of determined pieces (for example discards or scraps) of said strip of dough or portions of dough.

Advantageously, the processing device 1 is associated with means 15 for the automated feeding of the food to the containment receptacle 6. These automated feeding means can be implemented, for example, by a hopper 15a which is connected to a dispenser duct 15b that can be activated, when necessary, to dispense the food into the containment receptacle 6.

In this regard, it is advisable that the hopper 15a be supported by the frame 2 and, in particular, by a lower supporting structure 2a, and located in an area arranged above the second position of the containment receptacle 6.

Advisably, the first actuation means 11 can be implemented by a motor 11 a which is connected, by means of a movement mechanism, for example by means of a crankshaft 11b, to the or to each processing element 5.

The operation of the device 1 for processing a strip of dough according to the present invention is evident from the foregoing description.

In the condition shown in figure 4, in which the processing elements 5 are in the disengagement position and the containment receptacle 6 is in the second position, the processing device 1 commands the second actuation means 12 to shift, according to the direction indicated by the arrow 300, the containment receptacle 6 towards the first position.

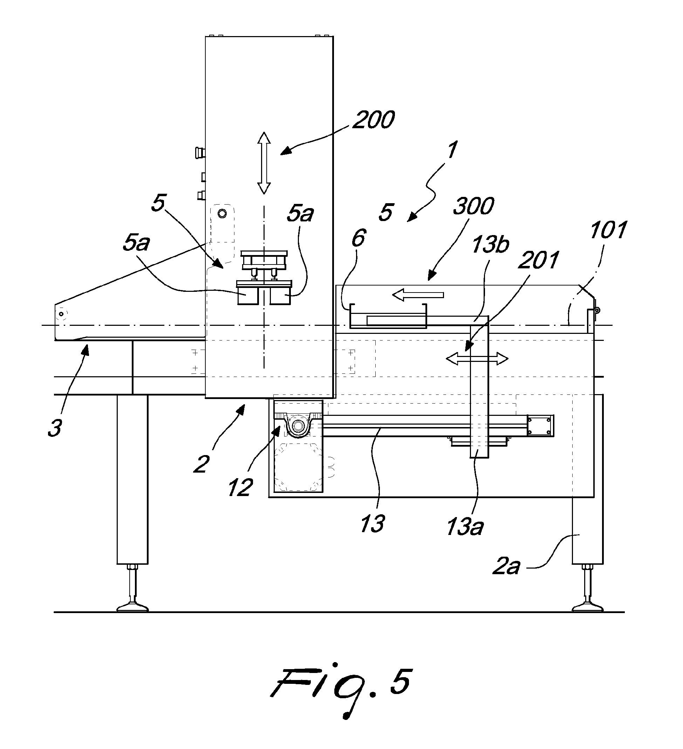

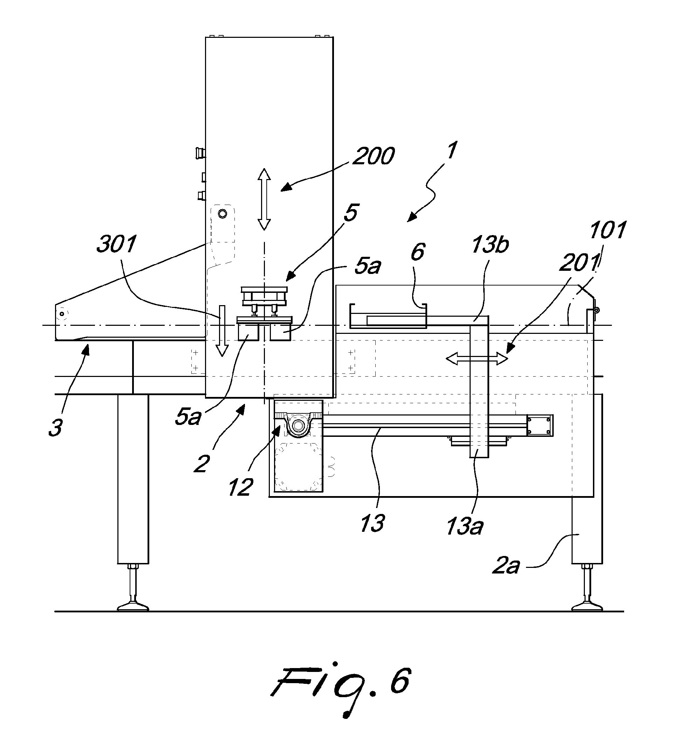

At this point (figure 5), the first actuation means 11 operate on the processing elements 5 so as to shift them along the direction indicated by the arrow 301 in figure 6 so as to bring them into contact with the food contained in the containment receptacle 6.

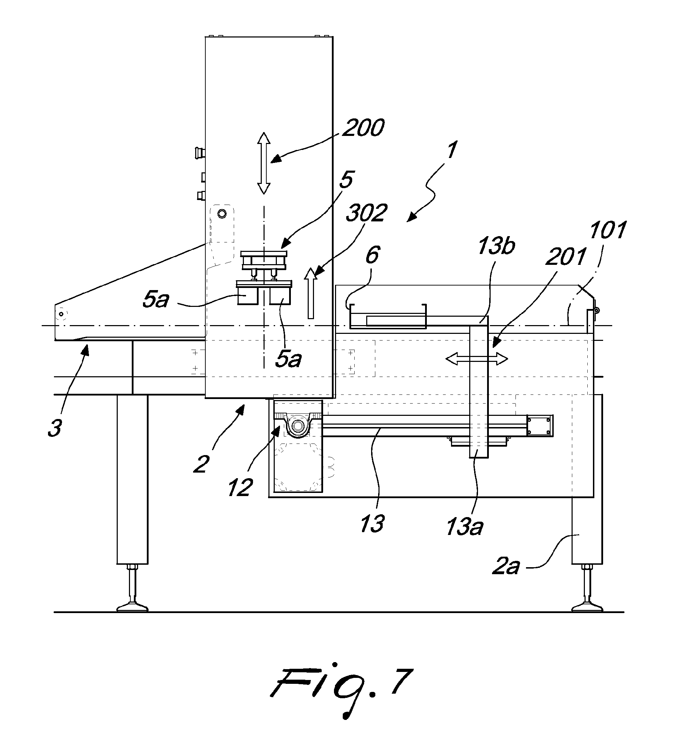

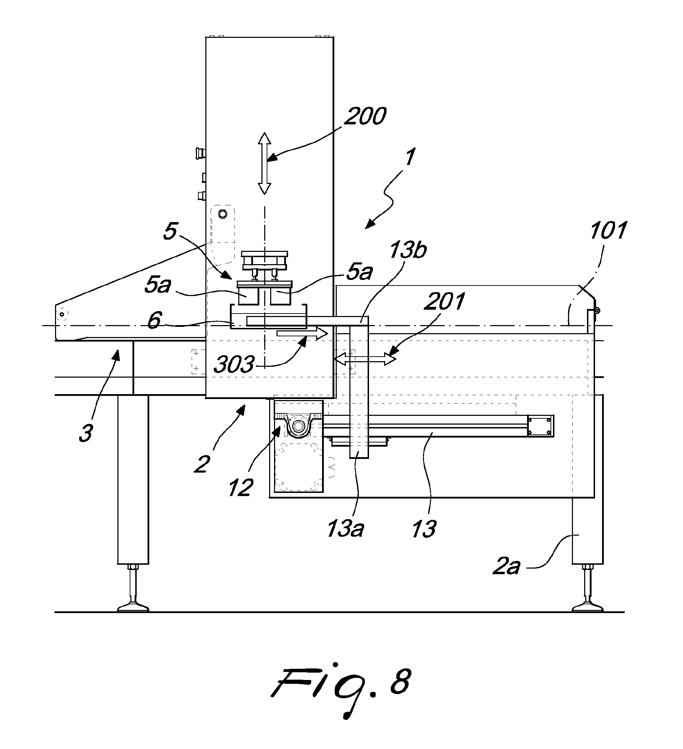

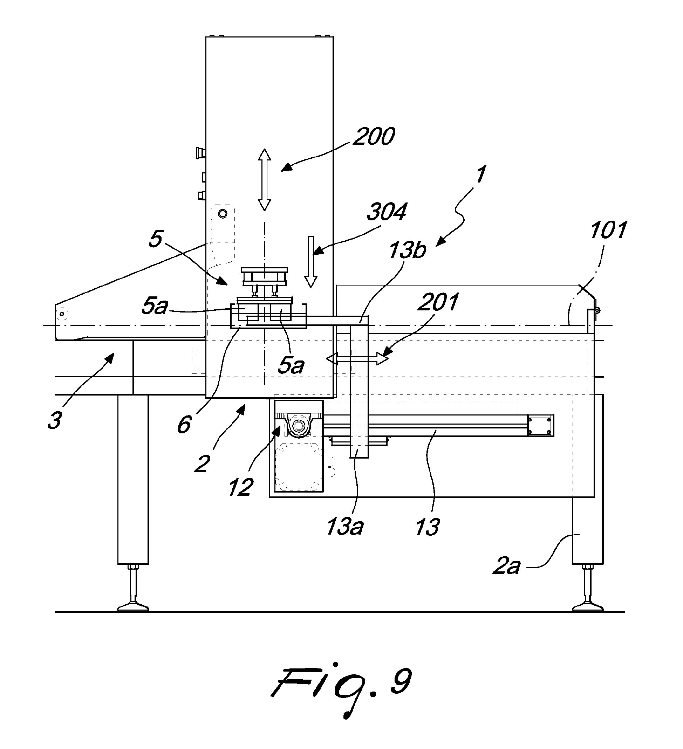

Once the processing elements 5 have been brought into contact with the food contained in the containment receptacle 6 (figure 6), the first actuation means 11 continue their operation by moving the processing elements upwards (arrow 302 in figure 7) so as to then allow (figure 7) the second actuation means 12 to bring, as indicated by the arrow 303, the containment receptacle 6 from the first position to the second position (figure 8) enabling, finally, the first actuation means (figure 9) to move the processing elements 5 from the disengagement position to the engagement position (arrow 304, figure 9).

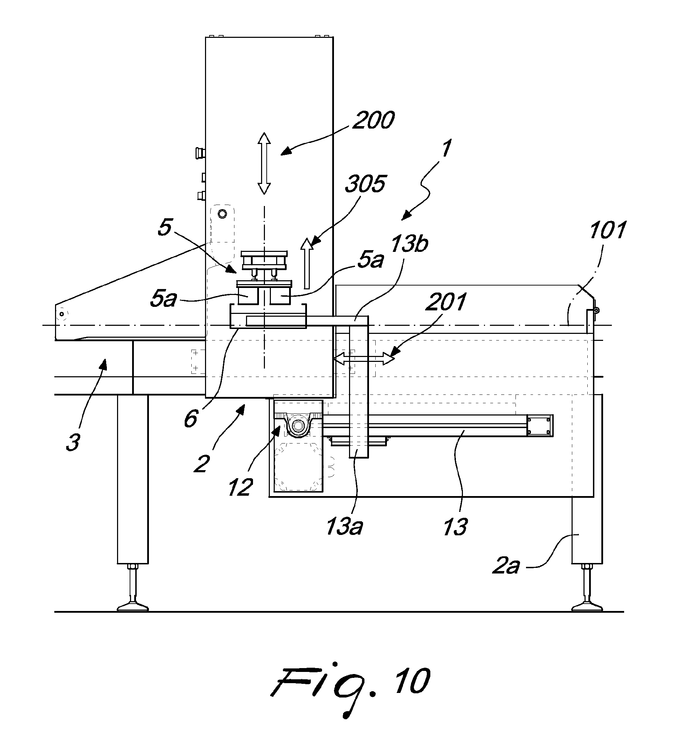

The first actuation means 11 then move the processing devices 5 upwards to return to the initial condition (figure 10) in which such processing elements 5 are in the disengagement condition and in which the containment receptacle 6 is in the second position.

All the characteristics of the invention, indicated above as advantageous, advisable or similar, may also be missing or substituted by equivalent characteristics.

The invention thus conceived is susceptible of numerous modifications and variations, all of which are within the scope of the appended claims.

Thus, for example, it is possible for the processing elements 5 to be slideably mounted on respective guides that run along a direction parallel to the direction of movement of the conveyance line 3, so as to be pulled ahead if needed by a lower plate 16 should it be necessary to provide a prolonged engagement between the processing elements 5 and the strip of dough 100.

In practice it has been found that in all the embodiments the invention has fully achieved the aim and objects.

In the first place, the processing device 1 can be easily combined with conveyance lines and lines for processing dough without leading to an increase in the transverse encumbrance of the line itself.

The separate, yet coordinated, management of two substantially rectilinear movements (that of the processing elements 5 along the direction 200 and that of the containment receptacle 6 along the direction 201) ensures a level of precision of execution and a frequency of manoeuvres that are higher than those which can be obtained from traditional devices, while at the same time reducing the inertia of the moving components.

Finally, the back-and-forth movement of the containment receptacle 6 along the horizontal direction 201 determines a continuous levelling of the food (for example flour) inside the containment receptacle 6 itself.

In practice the materials employed, as well as the dimensions, may be any according to requirements.

Moreover, all the details may be substituted by other, technically equivalent elements.

The disclosures in Italian Patent Application No. VR2009A000151 from which this application claims priority are incorporated herein by reference.

Where the technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for processing a strip of dough, comprising a frame (2), which is associated with a line (3) for conveying at least one continuous strip of dough (100), said frame (2) supporting means (5a) for cutting the continuous strip of dough (100) into portions of dough (10), said processing device (1) comprising at least one supporting structure (4) for at least one processing element (5), which can be actuated on command so as to pass from at least one disengagement condition, in which said processing element (5) is spaced upward from said conveyance line (3), to an engagement condition, in which said processing element engages at least one part of said strip of dough (100) or of said portion of dough (10), **characterized in that** said frame (2) supports at least one containment receptacle (6) for at least one type of food, said containment receptacle (6) being arranged above said conveyance line (3), means being provided for the relative movement of said processing element (5) with respect to said containment receptacle (6) so as to move on command at least one part of said processing element (5) into contact with said food.

2. The processing device (1) according to claim 1, **characterized in that** said movement means comprise first means (11) for the actuation of said at least one processing element (5) along a direction (200) which is substantially perpendicular to said conveyance line (3) and second actuation means (12) which are adapted to move said at least one containment receptacle (6) between a first position, arranged along the movement direction (200) of said at least one processing element (5), and a second position, arranged above said movement line (3), wherein said containment receptacle (6) does not interfere with the movement of said at least one processing element (5) between said disengagement condition and said engagement condition.

3. The processing device (1) according to one or more of the preceding claims, **characterized in that** said second actuation means (12) are adapted to move said at least one containment receptacle (6) along a direction (201) which is substantially parallel to the direction of longitudinal extension of said conveyance line (3).

4. The processing device (1) according to one or more of the preceding claims, **characterized in that** said at least one processing element (5) moves cyclically into contact with said food contained within said containment receptacle (6) before moving into said condition of engagement with said strip of dough (100) or with said portion of dough (10).

5. The processing device (1) according to one or more of the preceding claims, **characterized in that** said at least one processing element (5) comprises an element (5a) for cutting said at least one continuous strip of dough (100) into said portions of dough (10), said at least one containment receptacle (6) comprising at least one type of food that is adapted to reduce the separation friction between said cutting element (5a) and said strip of dough (100).

6. The processing device (1) according to one or more of the preceding claims, **characterized in that** said food adapted to reduce separation friction is selected from the group that comprises flour, oil, water and the like.

7. The processing device (1) according to one or more of the preceding claims, **characterized in that** said at least one processing element (5) comprises a grip element, said at least one containment receptacle (6) comprising at least one type of food to be positioned on predefined parts of said strip of dough (100) or said portions of dough (10).

8. The processing device (1) according to one or more of the preceding claims, **characterized in that** said processing element (5) comprises a grip apparatus that is adapted to allow removal of specific parts of said strip of dough (100) or of said portions of dough (10).

9. The processing device (1) according to one or more of the preceding claims, **characterized in that** it comprises means (15) for the automated feeding of said food to said containment receptacle (6).
